# EUROPEAN PATENT SPECIFICATION

(11) **EP 4 571 169 B1**
(45) Date of publication and mention of the grant of the patent: **06.05.2026**
(21) Application number: 23215921.0
(22) Date of filing: 12.12.2023
(51) Int. Cl.: F16M 11/06, F16M 11/18, F16M 11/20, F16M 11/24

(54) **ANGLE ADJUSTMENT DEVICE FOR LIGHTING SOFTBOX**
WINKELEINSTELLVORRICHTUNG FÜR BELEUCHTUNGS-SOFTBOX
DISPOSITIF DE RÉGLAGE D'ANGLE POUR BOÎTIER SOUPLE D'ÉCLAIRAGE

(43) Date of publication of application: 18.06.2025
(73) Proprietor: Liao, Tsun-Chi, Taichung City (TW)
(72) Inventor: Liao, Tsun-Chi, Taichung City (TW)
(74) Representative: 2K Patent Partnerschaft mbB

(56) References cited:
- US-A1- 2022 026 013
- MANFROTTO PROFESSIONAL LIGHTING SUPPORTS: "025TM-20171108 SPARE PARTS", 8 November 2017 (2017-11-08), Manfrotto website, pages 1 - 3, XP093161787, Retrieved from the Internet <URL:https://cdn.manfrotto.com/media/downloadable/sparepart/025TM-20171108.pdf> [retrieved on 20240513]

## Description

### FIELD OF THE INVENTION

The present invention relates to an angle adjustment device, and more particularly relates to an angle adjustment device for a lighting softbox.

### BACKGROUND OF THE INVENTION

A lighting softbox angle adjustment device, such as the commercially available product Superboom with Column Stand-025TM produced by Manfrotto, is provided with a long rod to be erected on a bipod, the long rod is respectively provided with an operating device and a controlled device at two ends of the bipod, the controlled device is used for erecting a lighting softbox, while the operating device is provided with two cranks, and the two cranks can be rotated to respectively change an axial inclination angle and an axial rotation angle in a transmission way.

In order to increase an effective irradiation range of the lighting softbox, a design specification of the long rod is often greater than 3 meters, which causes trouble for a user due to the inability to transport the long rod by an ordinary sedan.

### SUMMARY OF THE INVENTION

The main object of the present invention is to disclose an angle adjustment device for a lighting softbox that can be disassembled into a first connecting rod and a second connecting rod which are originally connected in series, so as to shorten a length thereof to be transported by an ordinary sedan.

In order to achieve the above object, the present invention relates to an angle adjustment device for a lighting softbox, including an operating device, a first connecting rod, a second connecting rod, and a controlled device, wherein the operating device is provided with a rotary crank, an inclined crank, a rotary transmission assembly and an inclined transmission assembly, and the rotary transmission assembly and the inclined transmission assembly are driven by the rotary crank and the inclined crank to be rotatable around an axial direction respectively.

The first connecting rod is provided with a first outer tube, a first inner tube and a first inner rod, wherein one end of the first outer tube is linked and fixed to the operating device, the first inner tube is positioned in the first outer tube, the first inner rod is positioned in the first inner tube, one end of the first inner tube is provided with a first non-circular fixing base, the first non-circular fixing base is provided with a first fixing portion for fixing the first inner tube and matching an inner diameter of the first outer tube by an outer diameter thereof, and a first non-circular fixing tube connected to the first fixing portion, and an outer diameter of the first non-circular fixing tube is smaller than the first fixing portion, the rotary transmission assembly is in transmission connection to the first non-circular fixing tube, the inclined transmission assembly is in transmission connection to the first inner rod, the other end of the first inner tube is provided with a clamping fixing base, and the clamping fixing base is provided with a clamping fixing portion for fixing the first inner tube and a clamping non-circular fixing tube connected to the clamping fixing portion and matched with the inner diameter of the first outer tube by an outer diameter thereof.

The second connecting rod is provided with a second outer tube, a second inner tube and a second inner rod, wherein the second inner tube is positioned in the second outer tube, the second inner rod is positioned in the second inner tube, one end of the second inner tube is provided with a second non-circular fixing base, the second non-circular fixing base is provided with a second fixing portion for fixing the second inner tube and matching with an inner diameter of the second outer tube by an outer diameter thereof, and a second non-circular fixing tube connected to the second fixing portion and an outer diameter of the second non-circular fixing tube is smaller than the second fixing portion, the clamping non-circular fixing tube is in transmission connection to the second non-circular fixing tube, the first inner rod is in transmission connection to the second inner rod, and the other end of the first outer tube is linked and fixed to one end of the second outer tube.

The controlled device is provided with a rotary portion, an inclined portion, a mounting column, an outer tube fixing base and a plurality of screw positioning beads, wherein the inclined portion is pivoted to the rotary portion, the mounting column is disposed on the inclined portion, the second inner tube is fixed to the rotary portion, so as to enable the second inner tube and the rotary portion to synchronously rotate in an axial direction, the second inner rod is in transmission connection to the inclined portion to drive the inclined portion to rotate around a direction perpendicular to the axial direction of the rotary portion, and the plurality of screw positioning beads surround the outer tube fixing base and pass through the outer tube fixing base and the second outer tube, and the plurality of screw positioning beads abutting against the rotary portion in a relative direction.

Accordingly, the angle adjustment device for the lighting softbox provided by the present invention can be disassembled into the first connecting rod and the second connecting rod, so as to shorten a length thereof to be transported by the ordinary sedan.

### BRIEF DESCRIPTION OF THE DRAWINGS

Fig. 1 is a schematic view showing an overall structure of the present invention.
Fig. 2 is a schematic view showing the structure of the present invention with some parts disassembled.
Fig. 3 is an exploded view showing the overall structure of the present invention.
Fig. 4 is a schematic view showing a structure of an operating device of the present invention.
Fig. 5 is a schematic view showing a structure of a first non-circular fixing base of the present invention.
Fig. 6 is a schematic view showing a structure of an outer tube fixing base of the present invention.

### DETAILED DESCRIPTION OF THE PREFERRED EMBODIMENTS

The technical contents of the present invention are described as follows with reference to the accompanying drawings.

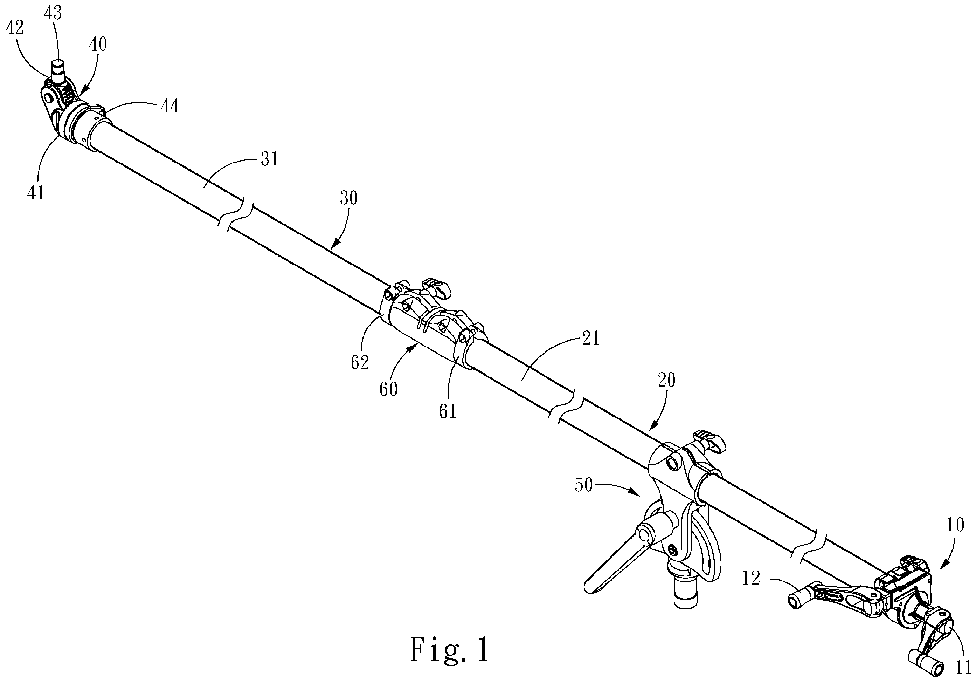

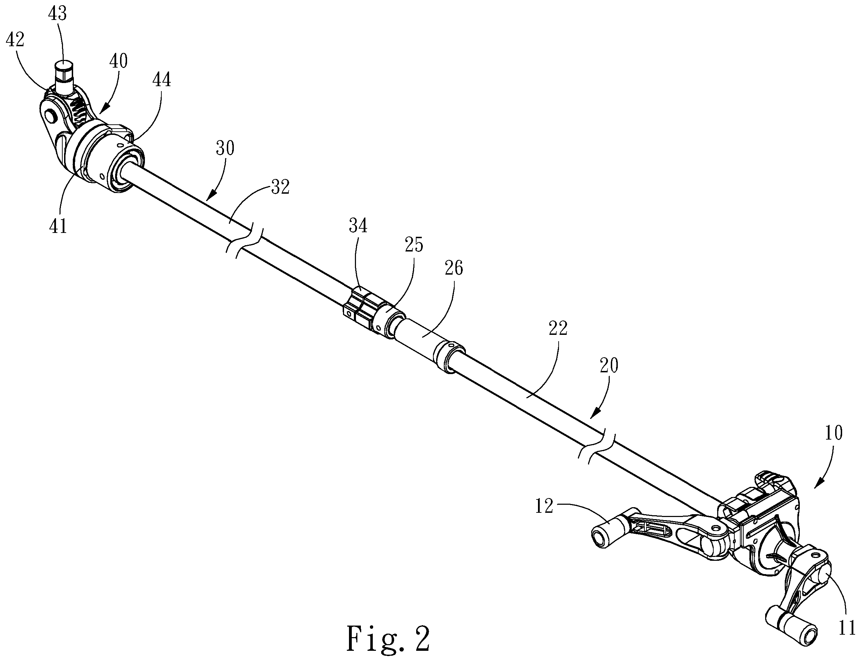

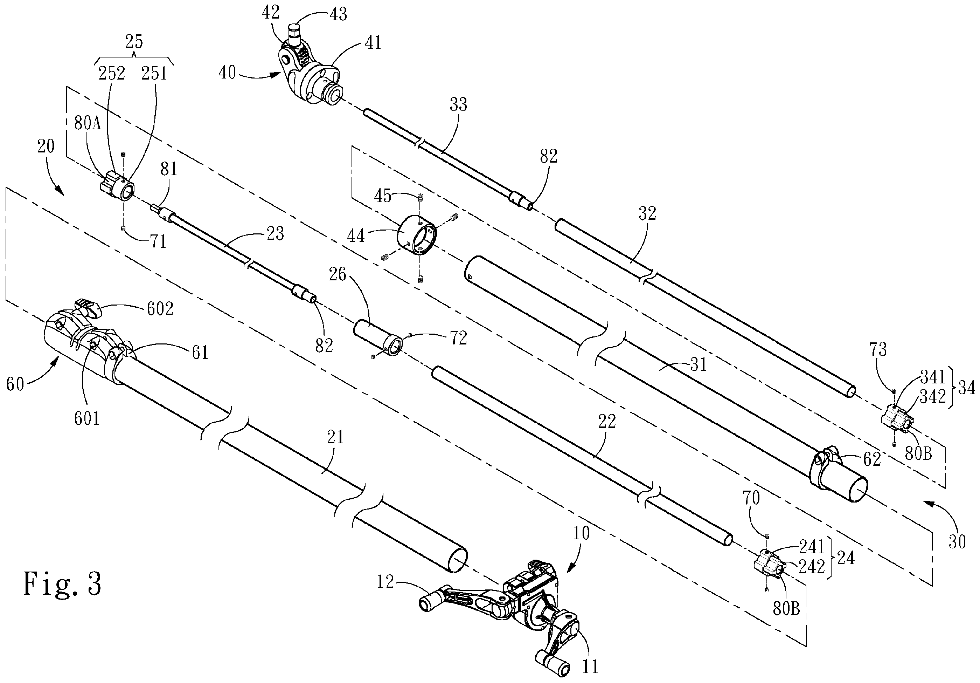

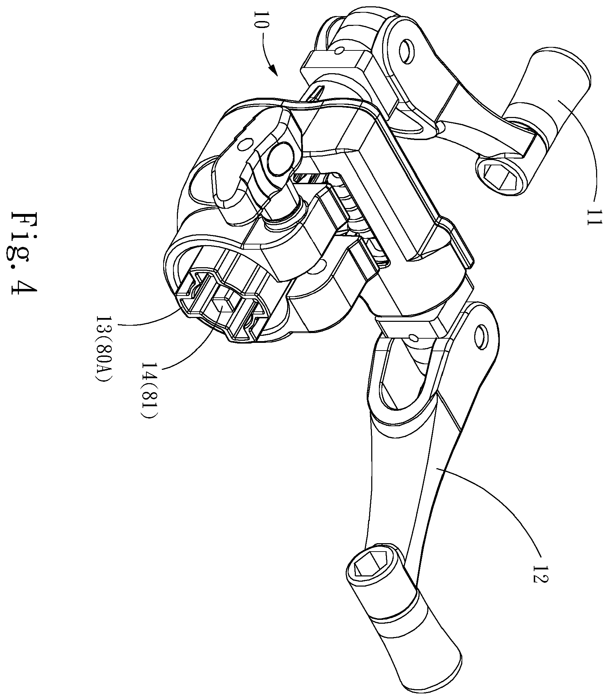

Referring to Fig. 1, Fig. 2 and Fig. 3, the present invention relates to an angle adjustment device for a lighting softbox. The angle adjustment device provided by the present invention includes an operation device 10, a first connecting rod 20, a second connecting rod 30 and a controlled device 40. By referring to Fig. 4, the operating device 10 is provided with a rotary crank 11, an inclined crank 12, a rotary transmission assembly 13 and an inclined transmission assembly 14, wherein the rotary transmission assembly 13 and the inclined transmission assembly 14 are driven by the rotary crank 11 and the inclined crank 12 respectively, to be rotatable in an axial direction. In an example, the rotary crank 11 and the inclined crank 12 rotate around an axis.

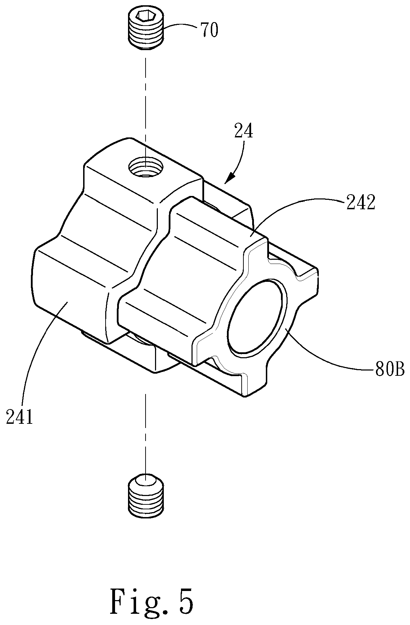

The first connecting rod 20 is provided with a first outer tube 21, a first inner tube 22, and a first inner rod 23, wherein the first outer tube 21 is erected on an angle adjustment base 50, and one end of the first outer tube 21 is linked and fixed to the operating device 10. The first inner tube 22 is positioned in the first outer tube 21, and the first inner rod 23 is positioned in the first inner tube 22. By referring to Fig. 5, one end of the first inner tube 22 is provided with a first non-circular fixing base 24, the first non-circular fixing base 24 is provided with a first fixing portion 241 and a first non-circular fixing tube 242, the first fixing portion 241 is provided for fixing the first inner tube 22 and matches an inner diameter of the first outer tube 21 by an outer diameter thereof. In an example, the first fixing portion 241 is fixed to the first inner tube 22 by a plurality of bolts 70 passing through thereof, and the first non-circular fixing tube 242 is connected to the first fixing portion 241, and an outer diameter of the first non-circular fixing tube 242 is smaller than the first fixing portion 241. The rotary transmission assembly 13 is in transmission connection to the first non-circular fixing tube 242, and the inclined transmission assembly 14 is in transmission connection to the first inner rod 23.

The other end of the first inner tube 22 is provided with a clamping fixing base 25, and the clamping fixing base 25 is provided with a clamping fixing portion 251 and a clamping non-circular fixing tube 252, the clamping fixing portion 251 is provided for fixing the first inner tube 22. In an example, the clamping fixing portion 251 is fixed to an extension tube 26, then the extension tube 26 is fixed to the other end of the first inner tube 22, and the clamping fixing portion 251 is fixed to the extension tube 26 by a plurality of bolts 71 passing through thereof, and the extension tube 26 is fixed to the first inner tube 22 by a plurality of bolts 72 passing through thereof. The clamping non-circular fixing tube 252 is connected to the clamping fixing portion 251 and matches the inner diameter of the first outer tube 21 by an outer diameter thereof.

The second connecting rod 30 is provided with a second outer tube 31, a second inner tube 32, and a second inner rod 33, wherein the second inner tube 32 is positioned in the second outer tube 31, and the second inner rod 33 is positioned in the second inner tube 32, one end of the second inner tube 32 is provided with a second non-circular fixing base 34. The second non-circular fixing base 34 is provided with a second fixing portion 341 and a second non-circular fixing tube 342, the second fixing portion 341 is provided for fixing the second inner tube 32 and matching an inner diameter of the second outer tuber 31 by an outer diameter thereof. In an example, the second fixing portion 341 is fixed to the second inner tube 32 by a plurality of bolts passing through thereof. The second non-circular fixing tube 342 is connected to the second fixing portion 341, and an outer diameter of the second non-circular fixing tube 342 is smaller than the second fixing portion 341, the clamping non-circular fixing tube 252 is in transmission connection to the second non-circular fixing tube 342, the first inner rod 23 is in transmission connection to the second inner rod 33, and the other end of the first outer tube 21 is linked and fixed to one end of the second outer tube 31. In an example, the first outer tube 21 and the second outer tube 31 are penetrated into two sides of a tube sleeve 60 respectively, and are fixed to the tube sleeve 60 by a fixing screw 601 and a thumb screw 602 respectively. The thumb screw 602 can be directly locked or loosened by manual operation to facilitate disassembly. Moreover, the first outer tube 21 and the second outer tube 31 are sleeved and fixed with a limiting sleeve 61, 62 respectively, and the two limiting sleeves 61, 62 are adjacent to two sides of the tube sleeve 60. The limiting sleeve 61 and the limiting sleeve 62 can limit lengths of the first outer tube 21 and the second outer tube 31 penetrating into the tube sleeve 60.

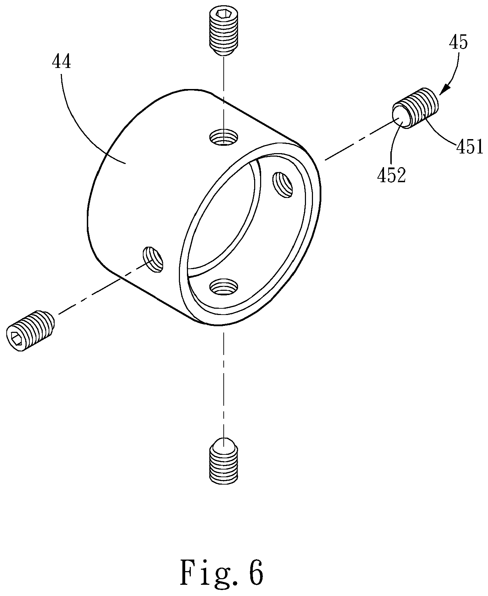

With reference to Fig. 6, the controlled device 40 is provided with a rotary portion 41, an inclined portion 42, a mounting column 43, an outer tube fixing base 44 and a plurality of screw positioning beads 45, wherein the inclined portion 42 is pivoted to the rotary portion 41, the mounting column 43 is disposed on the inclined portion 42, the second inner tube 32 is fixed to the rotary portion 41 to enable the second inner tube 32 and the rotary portion 41 to synchronously rotate in an axial direction, the second inner rod 33 is in transmission connection to the inclined portion 42 to drive the inclined portion 42 rotating around a direction perpendicular to the axial direction of the rotary portion 41, and the plurality of screw positioning beads 45 surround the outer tube fixing base 44 and pass through the outer tube fixing base 44 and the second outer tube 31, and the plurality of screw positioning beads 45 abuts against the rotary portion 41, namely, the outer tube fixing base 44 and the second outer tube 31 are fixed together through the penetration of the plurality of screw positioning beads 45. In an example, the plurality of screw positioning beads 45 include a screw 451 and a steel bead 452 positioned at a front end of the screw 451, the steel bead 452 has a universal rotational degree of freedom and abuts against the rotary portion 41.

In addition, the rotary transmission assembly 13 is in transmission connection to the first non-circular fixing tube 242, and the clamping non-circular fixing tube 252 is in transmission connection to the second non-circular fixing tube 342. In an example, a junction of the rotary transmission assembly 13 and the first non-circular fixing tube 242 is cross-shaped tubular side ends 80A, 80B matched with each other in size and contour, while a junction of the clamping non-circular fixing tube 252 and the second non-circular fixing tube 342 is also the cross-shaped tubular side ends 80A, 80B matched with each other in size and contour, the non-circular cross-shaped tubular side ends 80A, 80B are assembled in series to transmit rotational torque to form a transmission connection. The inclined transmission assembly 14 is in transmission connection to the first inner rod 23, and the first inner rod 23 is in transmission connection to the second inner rod 33. In an example, a junction of the inclined transmission assembly 14 and the first inner rod 23 is a square rod side end 81 and a square sleeve side end 82 matched with each other, while a junction of the first inner rod 23 and the second inner rod 33 is also the square rod side end 81 and the square sleeve side end 82 matched with each other, and the non-circular square rod side end 81 and the square sleeve side end 82 are assembled in series to transmit rotational torque to form a transmission connection.

As described above, the present invention at least includes the following characteristics.
1. A detachable design allows for a shorter overall length and can be transported in a regular sedan for cost savings.
2. Through the design of the plurality of screw positioning beads surrounding the outer tube fixing base and passing through the outer tube fixing base and the second outer tube, and oppositely abutting against the rotary portion, the second inner rod and the second inner tube can stably rotate relative to the second outer tube, and the second outer tube can be prevented from falling off.
3. Through the non-circular cross-shaped tubular side ends, the square rod side ends and the square sleeve side ends can be assembled in series to transmit rotational torque to form a transmission connection.

## Claims

1. An angle adjustment device for a lighting softbox, comprising:
an operating device (10), comprising a rotary crank (11), an inclined crank (12), a rotary transmission assembly (13) and an inclined transmission assembly (14), wherein the rotary transmission assembly (13) and the inclined transmission assembly (14) being driven by the rotary crank (11) and the inclined crank (12) to be rotatable around an axial direction respectively;
a first connecting rod (20), provided with a first outer tube (21), a first inner tube (22) positioned in the first outer tube (21), and a first inner rod (23) positioned in the first inner tube (22), one end of the first outer tube (21) being linked and fixed to the operating device (10), one end of the first inner tube (22) being provided with a first non-circular fixing base (24), the first non-circular fixing base (24) being provided with a first fixing portion (241) for fixing the first inner tube (22) and matching an inner diameter of the first outer tube (21) by an outer diameter thereof, and a first non-circular fixing tube (242) connected to the first fixing portion (241), an outer diameter of the first non-circular fixing tube (242) is smaller than the first fixing portion (241), the rotary transmission assembly (13) being in transmission connection to the first non-circular fixing tube (242), the inclined transmission assembly (14) being in transmission connection to the first inner rod (23), the other end of the first inner tube (22) being provided with a clamping fixing base (25), and the clamping fixing base (25) being provided with a clamping fixing portion (251) for fixing the first inner tube (22) and a clamping non-circular fixing tube (252) connected to the clamping fixing portion (251) and matched with the inner diameter of the first outer tube (21) by an outer diameter thereof.;
a second connecting rod (30), provided with a second outer tube (31), a second inner tube (32) positioned in the second outer tube (31), and a second inner rod (33) positioned in the second inner tube (32), one end of the second inner tube (32) being provided with a second non-circular fixing base (34), the second non-circular fixing base (34) being provided with a second fixing portion (341) for fixing the second inner tube (32) and matching with an inner diameter of the second outer tube (31) by an outer diameter thereof, and a second non-circular fixing tube (342) connected to the second fixing portion (341) and an outer diameter of the second non-circular fixing tube (342) is smaller than the second fixing portion (341), the clamping non-circular fixing tube (252) being in transmission connection to the second non-circular fixing tube (342), the first inner rod (23) being transmission connection to the second inner rod (33), and the other end of the first outer tube (21) being linked and fixed to one end of the second outer tube (31); and
a controlled device (40), provided with a rotary portion (41), an inclined portion (42) pivoted to the rotary portion (41), a mounting column (43) disposed on the inclined portion (42), an outer tube fixing base (44) and a plurality of screw positioning beads (45), the second inner tube (32) being fixed to the rotary portion (41), the second inner rod (33) being in transmission connection to the inclined portion (42) to drive the inclined portion (42) to rotate around a direction perpendicular to the axial direction of the rotary portion (41), and the plurality of screw positioning beads (45) surrounding the outer tube fixing base (44) and passing through the outer tube fixing base (44) and the second outer tube (31), and the plurality of screw positioning beads (45) abutting against the rotary portion (41).

2. The angle adjustment device of claim 1, wherein the first fixing portion (241) is fixed to the first inner tube (22) by a plurality of bolts (70) passing through thereof, and the second fixing portion (341) is fixed to the second inner tube (32) by a plurality of bolts (73) passing through thereof.

3. The angle adjustment device of claim 1 or 2, wherein the first outer tube (21) is erected on an angle adjustment base (50).

4. The angle adjustment device of any of the claims 1 to 3, wherein the clamping fixing portion (251) is fixed to an extension tube (26), and then the extension tube (26) is fixed to the other end of the first inner tube (22).

5. The angle adjustment device of claim 4, wherein the clamping fixing portion (251) is fixed to the extension tube (26) by a plurality of bolts (71) passing through thereof, and the extension tube (26) is fixed to the first inner tube (22) by a plurality of bolts (72) passing through thereof.

6. The angle adjustment device of any of the claims 1 to 5, wherein a junction of the rotary transmission assembly (13) and the first non-circular fixing tube (242), and a junction of the clamping non-circular fixing tube (252) and the second non-circular fixing tube (342) are cross-shaped tubular side ends that matched with each other in size and contour.

7. The angle adjustment device of any of the claims 1 to 6, wherein a junction of the inclined transmission assembly (14) and the first inner rod (23), and a junction of the first inner rod (23) and the second inner rod (33) are a square rod side end and a square sleeve side end that matched with each other.

8. The angle adjustment device of any of the claims 1 to 7, wherein the first outer tube (21) and the second outer tube (22) penetrate into two sides of a tube sleeve (60) respectively, and are fixed to the tube sleeve (60) by a fixing screw (601) and a thumb screw (602) respectively.

9. The angle adjustment device of claim 8, wherein the first outer tube (21) and the second outer tube (22) are sleeved and fixed with a limiting sleeve (61, 62) respectively, and the two limiting sleeves (61, 62) are adjacent to two sides of the tube sleeve (60).

10. The angle adjustment device of any of the claims 1 to 9, wherein the plurality of screw positioning beads (45) comprise a screw (451) and a steel bead (452) positioned at a front end of the screw (451), the steel bead (452) has a universal rotational degree of freedom, and abuts against the rotary portion (41).

## Patentansprüche

1. Eine Winkelverstellvorrichtung für eine Beleuchtungs-Softbox, umfassend:
eine Bedienvorrichtung (10), die eine Drehkurbel (11), eine Neigungskurbel (12), eine Drehübertragungsanordnung (13) und eine Neigungsübertragungsanordnung (14), wobei die Drehübertragungsanordnung (13) und die Neigungsübertragungsanordnung (14) durch die Drehkurbel (11) und die Neigungskurbel (12) angetrieben werden, um jeweils um eine axiale Richtung drehbar zu sein;
eine erste Verbindungsstange (20), die mit einem ersten Außenrohr (21), einem ersten Innenrohr (22), das in dem ersten Außenrohr (21) angeordnet ist, und einer ersten Innenstange (23), die in dem ersten Innenrohr (22) angeordnet ist, versehen ist, wobei ein Ende des ersten Außenrohrs (21) mit der Bedienvorrichtung (10) verbunden und an dieser befestigt ist, wobei ein Ende des ersten Innenrohrs (22) mit einer ersten nichtkreisförmigen Befestigungsbasis (24) versehen ist, wobei die erste nichtkreisförmige Befestigungsbasis (24) mit einem ersten Befestigungsabschnitt (241) zum Befestigen des ersten Innenrohrs (22) und zum Anpassen an einen Innendurchmesser des ersten Außenrohrs (21) durch einen Außendurchmesser davon, und eine erste nichtkreisförmige Befestigungsrohr (242), die mit dem ersten Befestigungsabschnitt (241) verbunden ist, wobei ein Außendurchmesser des ersten nichtkreisförmigen Befestigungsrohrs (242) kleiner ist als der erste Befestigungsabschnitt (241), wobei die Drehübertragungsanordnung (13) in Übertragungsverbindung mit der ersten nichtkreisförmigen Befestigungsrohr (242) steht, die Neigungsübertragungsanordnung (14) in Übertragungsverbindung mit der ersten Innenstange (23) steht, das andere Ende des ersten Innenrohrs (22) mit einer Klemmbefestigungsbasis (25) versehen ist und die Klemmbefestigungsbasis (25) mit einem Klemmbefestigungsabschnitt (251) ( ) zum Befestigen des ersten Innenrohrs (22) und einem klemm-nichtkreisförmigen Befestigungsrohr (252) versehen ist, das mit dem Klemmbefestigungsabschnitt (251) verbunden ist und durch seinen Außendurchmesser an den Innendurchmesser des ersten Außenrohrs (21) angepasst ist.
eine zweite Verbindungsstange (30), die mit einem zweiten Außenrohr (31), einem zweiten Innenrohr (32), das in dem zweiten Außenrohr (31) angeordnet ist, und einer zweiten Innenstange (33), die in dem zweiten Innenrohr (32) angeordnet ist, versehen ist, wobei ein Ende des zweiten Innenrohrs (32) mit einer zweiten nichtkreisförmigen Befestigungsbasis (34) versehen ist, wobei die zweite nichtkreisförmige Befestigungsbasis (34) mit einem zweiten Befestigungsabschnitt (341) zum Befestigen des zweiten Innenrohrs (32) und zum Anpassen an einen Innendurchmesser des zweiten Außenrohrs (31) durch einen Außendurchmesser davon, und eine zweite nichtkreisförmige Befestigungsrohr (342), die mit dem zweiten Befestigungsabschnitt (341) verbunden ist, und ein Außendurchmesser der zweiten nichtkreisförmigen Befestigungsrohr (342) ist kleiner als der zweite Befestigungsabschnitt (341), wobei das klemm-nichtkreisförmige Befestigungsrohr (252) in Übertragungsverbindung mit der zweiten nichtkreisförmigen Befestigungsrohr (342) steht, die erste Innenstange (23) in Übertragungsverbindung mit der zweiten Innenstange (33) steht und das andere Ende des ersten Außenrohrs (21) mit einem Ende des zweiten Außenrohrs (31) verbunden und daran befestigt ist; und
eine gesteuerte Vorrichtung (40), die mit einem Drehabschnitt (41), einem zum Drehabschnitt (41) schwenkbaren geneigten Abschnitt (42), einer an den geneigten Abschnitt (42) angeordneten Montagesäule (43), einer Außenrohr-Befestigungsbasis (44) und einer Vielzahl von Schraubenpositionierungskugeln (45) versehen ist, wobei das zweite Innenrohr (32) an dem Drehabschnitt (41) befestigt ist, die zweite Innenstange (33) in Übertragungsverbindung mit dem geneigten Abschnitt (42) steht, um den geneigten Abschnitt (42) anzutreiben, sich um eine Richtung senkrecht zur axialen Richtung des Drehabschnitts (41) zu drehen, und wobei die mehrere Schraubenpositionierungskugeln (45) die Außenrohr-Befestigungsbasis (44) umgeben und durch die Außenrohr-Befestigungsbasis (44) und das zweite Außenrohr (31) hindurchgehen, und wobei die mehrere Schraubenpositionierungskugeln (45) an den Drehabschnitt (41) anstoßen.

2. Die Winkelverstellvorrichtung nach Anspruch 1, wobei der erste Befestigungsabschnitt (241) durch mehrere Bolzen (70), die durch ihn hindurchgehen, an dem ersten Innenrohr (22) befestigt ist und der zweite Befestigungsabschnitt (341) durch mehrere Bolzen (73), die durch ihn hindurchgehen, an dem zweiten Innenrohr (32) befestigt ist.

3. Winkelverstellvorrichtung nach Anspruch 1 oder 2, wobei das erste Außenrohr (21) auf einer Winkelverstellbasis (50) aufgestellt ist.

4. Die Winkelverstellvorrichtung nach einem der Ansprüche 1 bis 3, wobei der Klemmbefestigungsabschnitt (251) an einem Verlängerungsrohr (26) befestigt ist und das Verlängerungsrohr (26) dann am anderen Ende des ersten Innenrohrs (22) befestigt ist.

5. Die Winkelverstellvorrichtung nach Anspruch 4, wobei der Klemmbefestigungsabschnitt (251) mit mehreren durch ihn hindurchgehenden Bolzen (71) an dem Verlängerungsrohr (26) befestigt ist und das Verlängerungsrohr (26) mit mehreren durch ihn hindurchgehenden Bolzen (72) an dem ersten Innenrohr (22) befestigt ist.

6. Winkelverstellvorrichtung nach einem der Ansprüche 1 bis 5, wobei eine Verbindungsstelle der Drehübertragungsanordnung (13) und der ersten nichtkreisförmigen Befestigungsrohr (242) und eine Verbindungsstelle des klemm-nichtkreisförmigen Befestigungsrohrs (252) und der zweiten nichtkreisförmigen Befestigungsrohr (342) kreuzförmige Rohrseitenenden sind, die in Größe und Kontur zueinander passen.

7. Die Winkelverstellvorrichtung nach einem der Ansprüche 1 bis 6, wobei eine Verbindungsstelle der geneigten Übertragungsanordnung (14) und der ersten Innenstange (23) sowie eine Verbindungsstelle der ersten Innenstange (23) und der zweiten Innenstange (33) ein quadratisches Stangenseitenende und ein quadratisches Hülsen-Seitenende sind, die zueinander passen.

8. Die Winkelverstellvorrichtung nach einem der Ansprüche 1 bis 7, wobei das erste Außenrohr (21) und das zweite Außenrohr (22) jeweils in zwei Seiten einer Rohrhülse (60) eindringen und jeweils durch eine Fixierschraube (601) und eine Daumenschraube (602) an der Rohrhülse (60) befestigt sind.

9. Die Winkelverstellvorrichtung nach Anspruch 8, wobei das erste Außenrohr (21) und das zweite Außenrohr (22) jeweils mit einer Begrenzungshülse (61, 62) ummantelt und fixiert sind und die beiden Begrenzungshülsen (61, 62) an zwei Seiten der Rohrhülse (60) angrenzen.

10. Die Winkelverstellvorrichtung nach einem der Ansprüche 1 bis 9, wobei die mehrere Schraubenpositionierungskugeln (45) eine Schraube (451) und eine Stahlkugel (452) umfassen, die an einem vorderen Ende der Schraube (451) positioniert ist, wobei die Stahlkugel (452) einen universellen Drehfreiheitsgrad aufweist und an dem Drehabschnitt (41) anliegt.

## Revendications

1. Un dispositif de réglage d'angle pour une boîte à lumière d'éclairage, comprenant :
un dispositif de commande (10) qui comprend une manivelle de rotation (11), une manivelle d'inclinaison (12), un ensemble de transmission de rotation (13) et un ensemble de transmission d'inclinaison (14), l'ensemble de transmission de rotation (13) et l'ensemble de transmission d'inclinaison (14) étant entraînés par la manivelle de rotation (11) et la manivelle d'inclinaison (12) afin de pouvoir tourner respectivement autour d'une direction axiale ;
une première tige de liaison (20) qui est pourvue d'un premier tube extérieur (21), d'un premier tube intérieur (22) disposé dans le premier tube extérieur (21) et une première tige intérieure (23) disposée dans le premier tube intérieur (22), une extrémité du premier tube extérieur (21) étant reliée au dispositif de commande (10) et fixée à celui-ci, une extrémité du premier tube intérieur (22) étant pourvue d'une première base de fixation non circulaire (24), la première base de fixation non circulaire (24) étant pourvue d'une première portion de fixation (241) pour fixer le premier tube intérieur (22) et pour s'adapter à un diamètre intérieur du premier tube extérieur (21) par un diamètre extérieur de celui-ci, et d'un premier tube de fixation non circulaire (242) relié à la première portion de fixation (241), un diamètre extérieur ( ) du premier tube de fixation non circulaire (242) étant plus petit que la première portion de fixation (241), l'ensemble de transmission de rotation (13) étant en communication de transmission avec le premier tube de fixation non circulaire (242) (242), l'ensemble de transmission d'inclinaison (14) étant en communication de transmission avec la première tige intérieure (23), l'autre extrémité du premier tube intérieur (22) étant pourvue d'une base de fixation par serrage (25) et la base de fixation par serrage (25) étant pourvue d'une portion de fixation par serrage (251) ( ) pour fixer le premier tube intérieur (22) et d'un tube de fixation par serrage non circulaire (252) qui est relié à la portion de fixation par serrage (251) et qui est adapté par son diamètre extérieur au diamètre intérieur du premier tube extérieur (21).
une deuxième tige de liaison (30) qui est pourvue d'un deuxième tube extérieur (31), d'un deuxième tube intérieur (32) disposé dans le deuxième tube extérieur (31) et d'une deuxième tige intérieure (33) disposée dans le deuxième tube intérieur (32), une extrémité du deuxième tube intérieur (32) étant pourvue d'une deuxième base de fixation non circulaire (34), la deuxième base de fixation non circulaire (34) étant pourvue d'une deuxième portion de fixation (341) pour fixer le deuxième tube intérieur (32) et s'adapter à un diamètre intérieur du deuxième tube extérieur (31) par un diamètre extérieur de celui-ci, et un deuxième tube de fixation non circulaire (342) relié à la deuxième portion de fixation (341) de l' , et un diamètre extérieur du deuxième tube de fixation non circulaire (342) est inférieur à la deuxième portion de fixation (341), le tube de fixation par serrage non circulaire (252) est en communication de transmission avec le deuxième tube de fixation non circulaire (342), la première tige intérieure (23) est en communication de transmission avec la deuxième tige intérieure (33), et l'autre extrémité du premier tube extérieur (21) est reliée à une extrémité du deuxième tube extérieur (31) et y est fixée ; et
un dispositif commandé (40) comprenant une section de rotation (41), une section inclinée (42) pouvant pivoter par rapport à la section de rotation (41) (42) pouvant pivoter par rapport à la section inclinée (41), une colonne de montage (43) disposée sur la section inclinée (42), une base de fixation du tube extérieur (44) et une pluralité de billes de positionnement de vis (45), le deuxième tube intérieur (32) étant fixé à la section de rotation (41), la deuxième tige intérieure (33) étant en liaison de transmission avec la section inclinée (42) afin d'entraîner la section inclinée (42) à tourner dans une direction perpendiculaire à la direction axiale de la section de rotation (41), et dans lequel les multiples billes de positionnement de vis (45) entourent la base de fixation du tube extérieur (44) et traversent la base de fixation du tube extérieur (44) et le deuxième tube extérieur (31), et dans lequel les multiples billes de positionnement de vis (45) butent contre la section de rotation (41) de manièr e.

2. Le dispositif de réglage angulaire selon la revendication 1, dans lequel la première portion de fixation (241) est fixée au premier tube intérieur (22) par plusieurs boulons (70) qui la traversent, et la deuxième portion de fixation (341) est fixée au deuxième tube intérieur (32) par plusieurs boulons (73) qui la traversent.

3. Le dispositif de réglage d'angle selon la revendication 1 ou 2, dans lequel le premier tube extérieur (21) est monté sur une base de réglage d'angle (50).

4. Le dispositif de réglage d'angle selon l'une des revendications 1 à 3, dans lequel la portion de fixation par serrage (251) est fixée à un tube d'extension (26) et le tube d'extension (26) est ensuite fixé à l'autre extrémité du premier tube intérieur (22).

5. Le dispositif de réglage d'angle selon la revendication 4, dans lequel la portion de fixation par serrage (251) est fixée au tube d'extension (26) à l'aide de plusieurs boulons (71) qui la traversent, et le tube d'extension (26) est fixé au premier tube intérieur (22) à l'aide de plusieurs boulons (72) qui le traversent.

6. Le dispositif de réglage d'angle selon l'une des revendications 1 à 5, dans lequel un point de jonction entre l'ensemble de transmission de rotation (13) et le premier tube de fixation non circulaire (242) et un point de jonction entre le tube de fixation par serrage (252) et le deuxième tube de fixation non circulaire (342) sont des extrémités latérales de tube en forme de croix qui s'adaptent les unes aux autres en termes de taille et de contour.

7. Le dispositif de réglage angulaire selon l'une des revendications 1 à 6, dans lequel un point de jonction entre le dispositif de transmission incliné (14) et de la première tige intérieure (23) ainsi qu'un point de jonction de la première tige intérieure (23) et de la deuxième tige intérieure (33) sont une extrémité latérale carrée de la tige et une extrémité latérale carrée du manchon qui s'adaptent l'une à l'autre.

8. Le dispositif de réglage d'angle selon l'une des revendications 1 à 7, dans lequel le premier tube extérieur (21) et le deuxième tube extérieur (22) pénètrent respectivement dans deux côtés d'un manchon de tube (60) et sont respectivement fixés au manchon de tube (60) par une vis de fixation (601) et une vis à tête de pouce (602) sur le manchon de tube (60).

9. Le dispositif de réglage d'angle selon la revendication 8, dans lequel le premier tube extérieur (21) et le deuxième tube extérieur (22) sont chacun recouverts et fixés par un manchon de butée (61, 62) et les deux manchons de butée (61, 62) sont adjacents aux deux côtés du manchon de tube (60).

10. Le dispositif de réglage d'angle selon l'une des revendications 1 à 9, dans lequel les multiples billes de positionnement de vis (45) comprennent une vis (451) et une bille en acier (452) positionné e à une extrémité avant de la vis (451), la bille en acier (452) ayant un degré de liberté de rotation universel et étant en butée contre la section de rotation (41).
